(19) Europäisches Patentamt
European Patent Office
Office européen des brevets

(11) **EP 4 455 729 A1**

(12) **EUROPEAN PATENT APPLICATION**

(43) Date of publication:
**30.10.2024 Bulletin 2024/44**

(21) Application number: **23170380.2**

(22) Date of filing: **27.04.2023**

(51) International Patent Classification (IPC):
***G01S 13/90*** *(2006.01)*

(52) Cooperative Patent Classification (CPC):
**G01S 13/9058; G01S 13/9019**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Airbus Defence and Space GmbH
82024 Taufkirchen (DE)**

(72) Inventors:
• **HIPPLER, Jörg
82024 Taufkirchen (DE)**

• **LOINGER, Andrea Federico
82024 Taufkirchen (DE)**

(74) Representative: **LKGLOBAL
Lorenz & Kopf Patentanwalt
Attorney at Law PartG mbB
Brienner Straße 11
80333 München (DE)**

Remarks:
Amended claims in accordance with Rule 137(2)
EPC.

(54) **RADAR SYSTEM AND METHOD FOR GENERATING A RADAR IMAGE**

(57) For generating a radar image, radar signals (112) are emitted by a plurality of moving radar signal emitters, and at least one radar signal receiver (130) detects reflected radar signals (114). A control unit receives a first position value of the radar signal emitters (120), a second position value of the radar signal receiver (130), and the reflected radar signals (114), and generates a radar image based on a first position value, the emitted radar signal (112) at the first position value, and a first point in time assigned to the first position value, and further based on a the second position value, the reflected radar signals, and a second point in time assigned to the second position value. The control unit determines an estimated movement trajectory section (151) of each radar signal emitter with a starting point (152) and an end point (153) based on the first tuple, and replaces the first position value in the first tuple with an estimated position value on the estimated trajectory section, and generates the radar image based on the first tuple with the replaced first position value and the second tuple.

Fig. 4

EP 4 455 729 A1

**Description**

Technical Field

The description relates to a radar system and a method for generating radar images. In particular, the description relates to a radar system that works in accordance with the principles of synthetic aperture radar, SAR.

Technical Background

A SAR system comprises one or more radar signal emitters and/or one or more radar signal receivers. The radar signals are emitted from different positions at the same time (when using multiple radar signal emitters) or by a single radar signal emitter at different positions and times. The radar signal receiver receives radar signals reflected by an object. Based on the position of the radar signal emitter, the position of the radar signal receiver, and the characteristic of the emitted and received signals, a radar image can be created. This is typically done by using multiple signal pairs, e.g., up to hundreds or many thousands of signal pairs, wherein each signal pair includes emitted and corresponding received signals.

SAR system typically comprise a mobile platform which include the radar signal emitter and/or the radar signal receiver. The mobile platform may be an aircraft or a spacecraft. Movement of the mobile platform is used to span an aperture, the so-called synthetic aperture.

EP 3 001 220 A1 describes a radar system that comprises a sending device with a first sending unit, a first receiving device with a first receiving unit, and a control device. The first sending unit is configured to emit radar signals. The first receiving unit is configured to receive the radar signals of the first sending unit which are reflected by an object to be detected. The control device is configured to control the sending device such that the sending device performs a movement as to adapt its position such that the radar signals emitted from the first sending unit and reflected from the object to be detected reach the first receiving unit of the first receiving device.

Summary

It may be seen as an object to improve the quality of images generated by a radar system, especially the images generated by a radar system working in accordance with the principles of SAR systems. This object is solved by the subject matter of the independent claims.

A radar system and a method according to the features of the independent claims are provided. Further developments can be derived from the dependent claims and from the following description.

Many of the features described with reference to the radar system may be implemented as method steps, or vice versa. Therefore, the description provided in the context of the radar system applies in an analogous manner also to the method described herein. In particular, the functions of the control unit may be implemented as method steps of the method and the method steps may be implemented as functions of the control unit. Therefore, it is to be understood that the description of the function of the radar system, especially of the control unit, is intended to also define method steps, and vice versa. According to an aspect, a radar system is provided. The radar system is configured for generating radar images of an observation region. The radar system comprises a plurality of radar signal emitters, at least one radar signal receiver, a plurality of mobile platforms, and a control unit. Each radar signal emitter is configured to emit radar signals towards the observation region. The at least one radar signal receiver is configured to detect radar signals reflected by the observation region. Each of the plurality of radar signal emitters is assigned to (e.g., located at or on) one of the at least one mobile platform, and each one of the plurality of mobile platforms is configured to move along a movement trajectory while the assigned radar signal emitter emits radar signals towards the observation region. The control unit is configured to receive a first position value of each of the plurality of radar signal emitters, a second position value of the at least one radar signal receiver, and the reflected radar signals as detected by the at least one radar signal receiver. The control unit is configured to generate a radar image based on a first tuple and a second tuple, wherein the first tuple includes, for each radar signal emitter, the first position value, a characterization of the emitted radar signal at the first position value, and a first point in time assigned to the first position value, and wherein the second tuple includes, for each radar signal receiver, the second position value, a characterization of the reflected radar signals, and a second point in time assigned to the second position value. The control unit is configured to determine an estimated movement trajectory section of each radar signal emitter with a starting point and an end point based on the first tuple. The control unit is configured to replace the first position value in the first tuple with an estimated position value on the estimated trajectory section, and to generate the radar image based on the first tuple with the replaced first position value and the second tuple.

A synthetic aperture radar generates radar images based on the position of the radar signal emitter(s), the radar signal receiver(s), and the reflected radar signals as detected by the radar signal receiver(s). In particular, the position of the radar signal emitter(s) at the time when the radar signal was emitted is considered for generating the radar images.

The radar signal emitter and/or the radar signal receiver change their position over time. Thus, images are taken with the emitter and/or receiver at different positions with regard to the observation region (or an object within the observation region)

A radar signal emitter detects its position in a given coordinate system, for example by using a Global Navigation Satellite System (GNSS), like Global Position System (GPS) or other comparable systems. For determining the position, the radar signal emitter comprises a respective functional module, like a GPS receiver. However, the position values determined by the GPS receiver may contain inaccuracies due to which the measured position value of the radar signal emitter may fluctuate or vary with respect to the true position of the radar signal emitter. The measurement error of the position of the radar signal emitter is unknown. In other words, the measured first position value varies in an unpredictable manner. When the measured first position value is taken for generating the radar images, the generated radar image may include inaccuracies which result from the variations and/or fluctuations of the measured first position value.

Generally, in the context of this description, a tuple is used to define a dataset including multiple parameters and multiple values for each parameter. The first tuple includes information that describe the emitted radar signals. In order to generate a radar image in a synthetic aperture radar, the following information may be used: position of the radar signal emitter and a characterization of the emitted radar signals that describes/defines the emitted radar signal. The first tuple furthermore includes a time stamp that indicates when the radar signal of the first tuple was emitted and also when the radar emitter was at the first position indicated in the first tuple. Thus, for the first tuple, the position of the radar signal emitter, the characterization of the emitted radar signals, and the time stamp represent the parameters, wherein for each of these parameters, multiple values may be included in the first tuple.

In other words, the first tuple is a position-time-signal-data tuple and includes information about the emitted radar signal at a given time and position. This first tuple includes the measured position value of the radar signal emitters with the unknown inaccuracies which result in inaccurate radar images. The first tuple preferably includes multiple position-time-signal-data values corresponding to multiple individual radar signals emitted at different positions and points in time.

To reduce or eliminate inaccuracies from the generated radar images, the first tuple is used to determine an estimated movement trajectory section. This estimated movement trajectory section is an approximation of the measured movement trajectory based on the measured position values. The approximation is, however, a smoothened trajectory without variations/fluctuations as included in the individually measured position values.

Generally, the control unit is configured to generate a radar image based on the first and second tuple. However, in the present case, the radar image is determined based on the updated first tuple. The updated first tuple includes an estimated position value along the estimated movement trajectory based on the time stamps assigned to the emitted radar signals. Thus, the measurement inaccuracies are eliminated from the position values of the radar emitter and instead of the measured position values at multiple subsequent points in time, an approximated position value on the estimated movement trajectory is used for generating the radar image.

For example, for determining the estimated movement trajectory, a first tuple value of the first tuple and a second tuple value of the first tuple are selected. The first position of the radar emitter according to the first tuple value is taken as a starting point and the second position of the radar emitter according to the second tuple value is taken as an end point of the movement trajectory section. The starting point and the end point are assigned with the time stamp of the first and second tuple values. The estimated movement trajectory including time and position information is included and the radar emitter is assigned a position on the estimated movement trajectory in accordance with the time stamps and the tuple values between the starting point and the end point.

According to an embodiment, each of the plurality of mobile platforms is a satellite carrying at least one of the plurality of radar signal emitters.

The radar system with the function of the control unit as described herein is particularly beneficial for mobile platforms that follow a predetermined movement trajectory like in an earth orbit. Thus, the measured position of the radar emitters can be replaced by an estimated movement trajectory section that corresponds to an ideal or approximated movement trajectory section.

However, the mobile platform may also be an aircraft, a land vehicle, or a watercraft.

According to a further embodiment, the movement trajectory is an earth orbit.

The satellite follows an earth orbit that is substantially elliptically shaped. For generating the radar images, the position values of the satellite carrying the radar emitter is needed for a certain period of time, the so-called observation time.

According to a further embodiment, the estimated movement trajectory is a circular arc starting at the starting point and ending at the end point, with a center point that corresponds to a center point of the movement trajectory.

For an arc of the orbit with a certain length, the elliptic arc may be approximated by a circular arc. Assuming that the mobile platform has a constant velocity along the movement trajectory and with the known starting time at the starting point and end time at the end point, the time of the mobile platform at each point along the estimated movement trajectory can be determined.

A circular arc can be determined by using at least three position values along the circular arc. These three position values are three measured position values. The circular arc is then generated and described by the starting point, the end point, and the center point.

Now, the updated position value of the radar signal emitter at a given time is determined by using the estimated movement trajectory and the measured position value of the radar signal emitter is replaced by the updated position value determined in accordance with the estimated movement trajectory. Although this is merely an approximation of the actual position of the radar signal emitter, the quality of the generated radar image is improved. While the measured position values of the radar signal emitter may have an unpredictable and unpredictably varying error (measurement noise), the estimated movement trajectory is a steady trajectory which can provide estimated position values closer to the actual position of the radar signal emitter with less fluctuations and with eliminated measurement noise. Although the absolute position value of the radar signal emitter may not be correct, the variation of two subsequent position values measured at two subsequent points in time is less or even eliminated when using the estimated movement trajectory. This approach reduces the fluctuation/variation of the position values of the radar signal emitter over time and thus contributes to an improved quality of the generated radar images.

According to a further embodiment, each of the plurality of radar signal receivers is assigned to one of the at least one mobile platform.

Not only the radar signal emitters may be assigned and located on one of the mobile platform, but also the radar signal receivers may be located on one of the mobile platforms. Thus, the radar system as described herein comprises mobile radar signal emitters and mobile radar signal receivers which establish a synthetic aperture radar. The position of the emitters and receivers, the emitted and detected signals, and the characterization of the emitted and detected signals, respectively, are used for generating the radar image.

According to a further embodiment, the control unit is configured to determine an estimated movement trajectory section of each radar signal receiver with a starting point and an end point based on the second tuple, and the control unit is further configured to replace the second position value in the second tuple with an estimated position value on the estimated trajectory section, and to generate the radar image based on the first tuple with the replaced first position value and the second tuple with the replaced second position value.

As described above with regard to the approximated/estimated position of the radar signal emitter, this may be applied to the position of the radar signal receiver. The measured position of the radar signal receiver also is subject to inaccuracies. These inaccuracies may be reduced by using an approximated/estimated movement trajectory section of the radar signal receiver and use the position of the radar signal receiver on this estimated movement trajectory section instead of the measured position for generating the radar image.

According to a further embodiment, the at least one radar signal receiver is co-located with one of the plurality of radar signal emitters on one of the mobile platforms.

At least some or each mobile platform of the radar system may include one radar signal emitter and one radar signal receiver. The radar signal emitter emits the radar signal towards the observation region and the radar signal receiver detects the reflected signals.

When one of the radar signal receivers is co-located with one of the radar signal emitters on one of the mobile platforms, the mobile platform measures the position for both, the emitter and the receiver. Thus, the estimated movement trajectory is determined once and can be used for replacing the measured position value of the radar signal emitter and of the radar signal receiver.

According to a further embodiment, the control unit is located in a ground station or assigned to one of the plurality of mobile platforms.

The detected radar signals from one or multiple mobile platforms may be transmitted to the control unit which then generates the radar images based on the received data.

The control unit may be located in a ground station and may be configured to receive data transmitted by the mobile platforms in a wireless manner. Alternatively, the control unit may be located on one of the mobile platforms. This mobile platform is communicatively connected (e.g., by a wireless data transmission channel) to the other mobile platforms of the radar system which transmit the position values, time values, emitted radar signal information, detected radar signal information, etc. to the control unit for generating the radar images.

According to a further embodiment, each one of the plurality of mobile platforms is configured to determine its position value in an earth-centered-earth-fixed (ECEF) coordinate system.

In an ECEF coordinate system, the earth center is the center of the ECEF coordinate system and the position of the mobile platform is determined by indicating coordinates in this ECEF system. The position in the ECEF coordinate system is determined by using a GNSS.

When the mobile platform carries a radar signal emitter and/or a radar signal receiver, the position of the mobile platform corresponds to the position of the radar signal emitter and/or the radar signal receiver.

According to a further embodiment, the control unit is configured to transform the position of the mobile platform in the ECEF coordinate system into a position value in an inertial coordinate system.

The position of the mobile platform (including any radar signal emitter and/or radar signal receiver assigned to this mobile platform) is transformed from the ECEF coordinate system into coordinates in an inertial coordinate system. According to a further embodiment, the control unit is configured to eliminate lateral and vertical deviations of the position value of the mobile platform from the estimated movement trajectory in the inertial coordinate system.

Thus, only the progress of the mobile platform along the movement trajectory remains with the lateral and vertical deviation being ignored and eliminated.

According to a further embodiment, the control unit is configured to transform the position value of the mobile platform in the inertial coordinate system into a position value in the ECEF coordinate system.

After eliminating the lateral and vertical deviation of the mobile platform in the inertial system, the position values are transformed back into the ECEF coordinate system and are now used for generating the radar images.

According to another aspect, a method for generating a radar image of an observation region is provided. The method comprises the steps: emitting, by each of a plurality of radar signal emitters, a radar signal towards the observation region; detecting, by at least one radar signal receiver, radar signals reflected by the observation region; moving, each of the plurality of radar signal emitters, along a movement trajectory while emitting, by each of the plurality of radar signal emitters radar signals towards the observation region; receiving, by a control unit, a first position value of each of the plurality of radar signal emitters, a second position value of the at least one radar signal receiver, and the reflected radar signals as detected by the at least one radar signal receiver; generating, by the control unit, a radar image based on a first tuple and a second tuple, wherein the first tuple includes, for each radar signal emitter, the first position value, a characterization of the emitted radar signal at the first position value, and a first point in time assigned to the first position value, wherein the second tuple includes, for each radar signal receiver, the second position value, a characterization of the reflected radar signals, and a second point in time assigned to the second position value; determining, by the control unit, an estimated movement trajectory section of each radar signal emitter with a starting point and an end point based on the first tuple; replacing, by the control unit, the first position value in the first tuple with an estimated position value on the estimated trajectory section, and generating, by the control unit, the radar image based on the first tuple with the replaced first position value and the second tuple.

According to an embodiment, the estimated movement trajectory is a circular arc starting at the starting point and ending at the end point, with a center point that corresponds to a center point of the movement trajectory.

According to a further embodiment, the method further comprises the steps: determining the first position value and/or the second position value in an earth-centered-earth-fixed (ECEF) coordinate system; transforming the first position value and/or the second position value in the ECEF coordinate system into a position value in an inertial coordinate system; eliminating lateral and vertical deviations of the first position value and/or the second position value from the estimated movement trajectory in the inertial coordinate system; and transforming the first position value and/or the second position value in the inertial coordinate system into a position value in the ECEF coordinate system.

Brief description of the drawings

The subject matter will hereinafter be described in conjunction with the following drawing figures, wherein like numerals denote like elements, and wherein:

Fig. 1    is a schematic representation of a radar system;

Fig. 2    is schematic representation of a radar unit;

Fig. 3    is a schematic representation of a mobile platform moving along a movement trajectory;

Fig. 4    is a schematic representation of a movement trajectory section;

Fig. 5    is a schematic representation of a method for generating a radar image.

Detailed description of the drawings

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

A greater understanding of the described subject matter may be obtained through a review of the illustrations together with a review of the detailed description that follows.

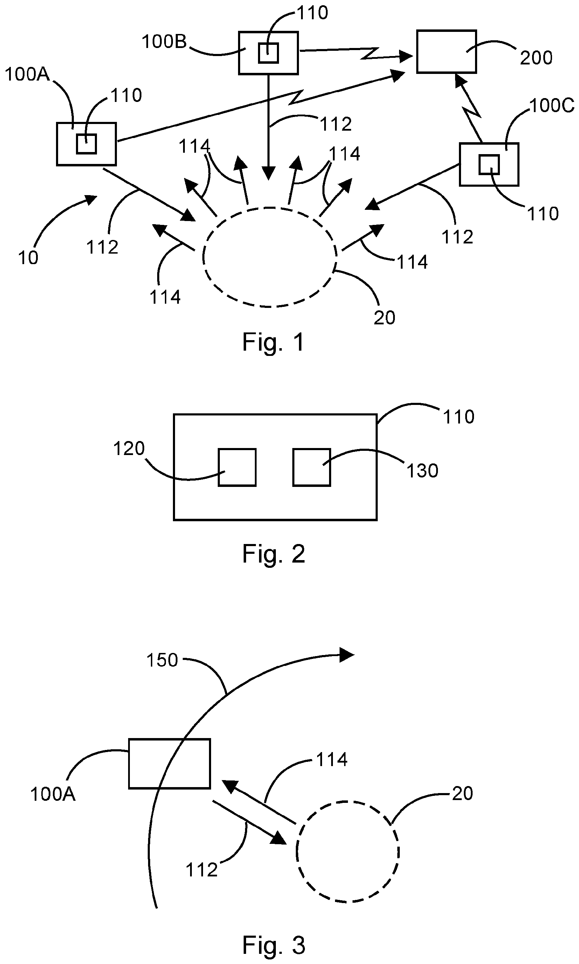

Fig. 1 shows a radar system 10 comprising three mobile platforms 100A, 100B, 100C and a control unit 200. The mobile platforms 100A, 100B, 100C may be similar or identical in structure and function. Each mobile platform 100A, 100B, 100C includes a radar unit 110 for emitting radar signals 112 towards an observation region 20 and for receiving reflected radar signals 114.

The mobile platforms 100A, 100B, 100C are communicatively connected to the control unit 200. These connections are preferably wireless radio connections for unidirectional or bidirectional data transmission between the mobile platforms 100A, 100B, 100C and the control unit 200.

The mobile platforms 100A, 100B, 100C determine their respective position (e.g., by using signals from a Global Navigation Satellite System like GPS) and transmit the measured position values to the control unit 200, together with a time stamp and the characteristics of the emitted radar signals 112 and the received radar signals 114. Based on these data, the control unit 200 generates a radar image.

The control unit 200 may be a stationary unit on ground or may be co-located with one of the radar units aboard one of the mobile platforms.

The mobile platforms may be satellites and travel along a movement trajectory which corresponds to a predefined earth orbit.

Fig. 2 shows a radar unit 110 that comprises a radar signal emitter 120 and a radar signal receiver 130. The radar signal emitter 120 and the radar signal receiver 130 may be part of a single module that is located on or at the mobile platform, or these functional units may be structurally separate from each other and each located aboard the mobile unit.

Fig. 3 schematically shows a mobile platform 100A moving along the movement trajectory 150. The movement trajectory 150 may represent part of an earth orbit and the mobile platform 100A is a satellite moving along the earth orbit. Radar signals 112 are emitted towards the observation region 20 and reflected back as radar signals 114 to be detected by the radar signal receiver 130 (see Fig. 2). However, an object located in the observation region 20 may also reflect radar signals towards another mobile platform, such that multiple radar signal receivers detect the reflected radar signals, as shown in Fig. 1.

The observation region 20 may be a region on the surface of the earth or airspace that is monitored by the radar system.

When the mobile platform 100A is a satellite, the movement trajectory 150 is known in advance. However, the position of the mobile platform still needs to be measured in order to assign a position value and a time stamp to the emitted and/or detected radar signals because the position at the certain point in time is required for generating the radar image. Measurement of the position of the mobile platform is typically prone to error, and may result in a radar image with reduced quality.

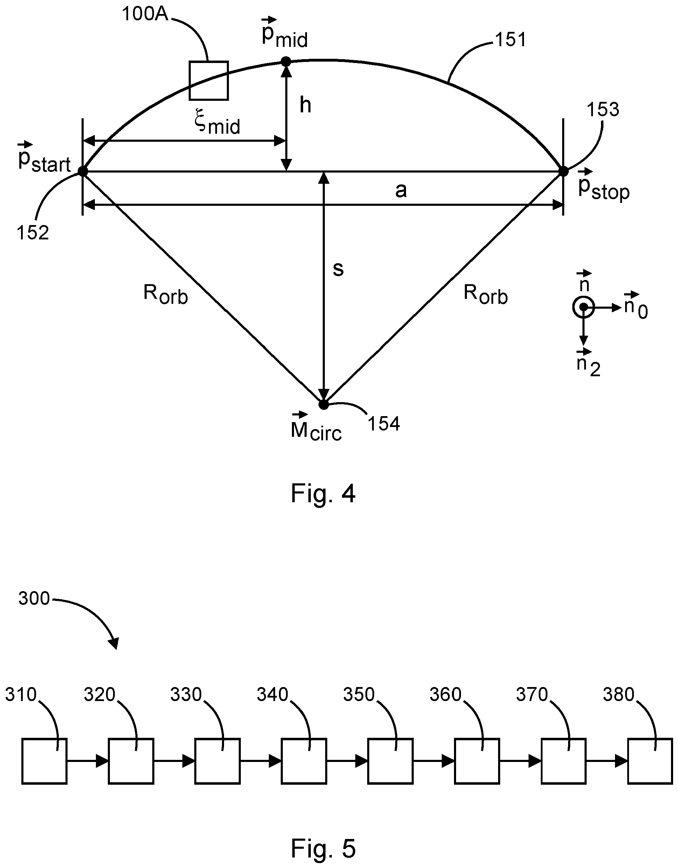

In order to reduce measurement noise of the position measurement, an ideal movement trajectory section 151 is determined that represents an approximation to the actual movement trajectory 150. Thus, the actually measured movement trajectory 150 is replaced by the movement trajectory section 151 of Fig. 4 and the theoretic position of the mobile platform 100A along this movement trajectory section 151 at a given point in time is considered as the position value of the mobile platform for generating the radar image.

Based on the measured position values of the mobile platform 100A, an approximated movement trajectory section 151 is determined with a starting point 152 ($\vec{p}_{start}$) and a starting time assigned to the starting point, an end point 153 ($\vec{p}_{stop}$) and an end time assigned to the end point, and a center point 154 ($\vec{M}_{circ}$) with the radius $R_{orb}$.

SAR algorithms that use the Fourier-Domain for Azimuth-Focusing typically need a convolution kernel that is space invariant along azimuth. Therefore, a straight line or a circular arc are taken as allowed orbit sections. The mobile platform 100A, like a satellite, travels on an orbit that is an ellipse 150 inside the inertial coordinates. If an orbit section is approximated by a circular arc 151 inside earth fixed co-ordinates (ECEF), it will have lateral deviations. These deviations get larger with the increase of the length of the orbit section. If the platform positions fit on the circular arc is done in an inertial coordinate system, the lateral deviations would disappear under ideal circumstances. The lateral deviations (out-of-orbit plane) are reduced from 1 meter or more to a few millimeters, like less than 5mm, and the vertical deviations (in-orbit plane) from more than 10 cm to less than 2 cm, for example. These data were derived from an ideal orbit example, which was sampled at constant time interval of 1 sec, like a common GNSS orbit product. If the position data would be delivered with the usual GNSS quality, deviation up 10 - 20 cm could be expected. These randomly lateral deviations are much larger than a quarter of the SAR wavelength, so that the image focusing quality is not achieved.

The quality improvement of the radar images is based on smoothing the orbit GNSS data by replacing the measured position values with position values along an approximated movement trajectory section. This is done by removing the orbit lateral deviations and using a constant velocity along the flight direction when following the approximated movement trajectory section. Alternatively, an approach with a constant acceleration is possible as well.

In one example, the orbit positions of the mobile platform for generating the radar images are generally determined according to the following scheme:

(1) the orbit positions (coordinates) in the earth-centered-earth-fixed (ECEF) coordinate system are measured
(2) the ECEF coordinates are transformed into coordinates in an inertial coordinate system (earth-centered-inertial coordinate system, ECI coordinate system)
(3) an approximated movement trajectory section is generated based on the coordinates in the ECI coordinate system
(4) position values of the mobile platform on the approximated movement trajectory section at the given points in time with the known velocity of the mobile platform are determined
(5) the ECI coordinates are transformed into ECEF coordinates
(6) the ECEF coordinates of step 5 are used for generating the radar image

Step (2) is the transformation from ECEF to ECI coordinates. A simplified transformation, where the z-axis of the two coordinate systems matches, can be formulated as the following time dependent rotation:

$$\vec{x}_{ECI} = \begin{bmatrix} cos(\Delta\varphi) & -sin(\Delta\varphi) & 0 \\ sin(\Delta\varphi) & cos(\Delta\varphi) & 0 \\ 0 & 0 & 1 \end{bmatrix} \cdot \vec{x}_{ECEF}$$

$$\Delta\varphi = \frac{360.9856123035484 \cdot \pi}{180}\left(t - t_{first}\right)$$

(Eq1)

$\Delta_\varphi$ depends on time, where t is the time tag of the measured GNSS position, $\vec{x}_{ECEF}$ and $t_{first}$ the first GNSS-position and its time tag.

Step (3) is the circular fit of the orbit section, i.e., generating the approximated movement trajectory section 151. This can be done by a least square fit or by a simple calculation from three points of the orbit section. These points are the start point, the end point and a point near the center of the orbit section, as shown in Fig. 4. The radius $R_{orb}$ and the center of the circular arc are calculated from the start point $\vec{p}_{start}$, the end point $\vec{p}_{stop}$, and the center point $\vec{p}_{mid}$ of the arc 151.

The normal on the plane of these three points 152, 153, 154 is:

$$\vec{n} = \frac{\left(\vec{p}_{stop} - \vec{p}_{start}\right) \times \left(\vec{p}_{mid} - \vec{p}_{start}\right)}{\left\|\left(\vec{p}_{stop} - \vec{p}_{start}\right) \times \left(\vec{p}_{mid} - \vec{p}_{start}\right)\right\|}$$

(Eq2)

The normal on the connection of the start/stop points inside the plane of the three known circle points is:

$$\vec{n}_2 = \frac{\left(\vec{p}_{stop} - \vec{p}_{start}\right) \times \vec{n}}{\left\|\left(\vec{p}_{stop} - \vec{p}_{start}\right) \times \vec{n}\right\|}$$

Eq3

The height of the circle segment at $\vec{p}_{mid}$ is:

$$h = \vec{p}_{start} \cdot \vec{n}_2 - \vec{p}_{mid} \cdot \vec{n}_2$$

Eq4

The length of the circle segment is:

$$a = \left\| \vec{p}_{start} - \vec{p}_{stop} \right\| \qquad \text{Eq5}$$

The projected length $\xi_{mid}$ of the point $\vec{p}_{mid}$ on the circle segment is calculated as:

$$\vec{n}_0 = \frac{\left( \vec{p}_{stop} - \vec{p}_{start} \right)}{\left\| \vec{p}_{stop} - \vec{p}_{start} \right\|} \qquad \text{Eq6}$$

$$\xi_{mid} = \left( \vec{p}_{mid} - \vec{p}_{start} \right) \cdot \vec{n}_0 \qquad \text{Eq7}$$

Then, s and circle Radius $R_{orb}$ are calculated:

$$s = \frac{a^2}{8h} - \frac{h}{2} - \frac{\left( \xi_{mid} - \frac{a}{2} \right)^2}{2h} \qquad \text{Eq8}$$

$$R_{orb} = \sqrt{s^2 + \frac{a^2}{4}} \qquad \text{Eq9}$$

The center point of the circular arc is:

$$\vec{M}_{circ} = \frac{\vec{p}_{start} + \vec{p}_{stop}}{2} + s \cdot \vec{n}_2 \qquad \text{Eq10}$$

The filtered positions inside the ECI coordinate system are generated by:

$$\vec{x}_{ECI,Smooth} = \vec{M}_{circ} + cos\big( \alpha(t) \big) \cdot \vec{e}_x \cdot R_{orb} + sin\big( \alpha(t) \big) \cdot \vec{e}_x \cdot R_{orb}$$

$$\vec{e}_x = \frac{\vec{p}_{start} - \vec{M}_{circ}}{\left| \vec{p}_{start} - \vec{M}_{circ} \right|} \qquad \text{Eq11}$$

$$\vec{e}_y = \frac{\vec{p}_{stop} - \vec{M}_{circ} - \left( \left( \vec{p}_{stop} - \vec{M}_{circ} \right) \cdot \vec{e}_x \right) \cdot \vec{e}_x}{\left| \vec{p}_{stop} - \vec{M}_{circ} - \left( \left( \vec{p}_{stop} - \vec{M}_{circ} \right) \cdot \vec{e}_x \right) \cdot \vec{e}_x \right|}$$

with

$$\alpha(t) = \frac{t - t_{start}}{t_{stop} - t_{sart}} \Delta\alpha$$

Eq12

$$\Delta\alpha = acos\left(\frac{\left(\vec{p}_{start} - \vec{M}_{circ}\right) \cdot \left(\vec{p}_{stop} - \vec{M}_{circ}\right)}{\left|\vec{p}_{start} - \vec{M}_{circ}\right| \cdot \left|\vec{p}_{stop} - \vec{M}_{circ}\right|}\right)$$

Position values of the mobile platform 100A along the approximated moving trajectory 151 are generated in step (4) based on the time of the mobile platform 100A at the starting point 152, the time of the mobile platform 100A at the end point 153, and the velocity of the mobile platform 100A on its path from the starting point to the end point by assuming a constant trajectory velocity. For any time between the starting time (time at the starting point) and the end time (time at the end point), an estimated position along the approximated movement trajectory section 151 can be determined by considering the trajectory velocity of the mobile platform 100A.

The inverse transformation of ECI coordinates to ECEF coordinates according to step (5) delivers then smoothed ECEF coordinates that are suitable for SAR processing and for generating the radar image in step (6).

Fig. 5 provides an overview of a method 300 for generating a radar image of an observation region. The method 300 comprises the steps: emitting, by each of a plurality of radar signal emitters, a radar signal towards the observation region in step 310; detecting, by at least one radar signal receiver, radar signals reflected by the observation region in step 320; moving each of the plurality of radar signal emitters along a movement trajectory while emitting, by each of the plurality of radar signal emitters radar signals towards the observation region in step 330; receiving, by a control unit, a first position value of each of the plurality of radar signal emitters, a second position value of the at least one radar signal receiver, and the reflected radar signals as detected by the at least one radar signal receiver in step 340; generating, by the control unit, a radar image based on a first tuple and a second tuple in step 350, wherein the first tuple includes, for each radar signal emitter, the first position value, a characterization of the emitted radar signal at the first position value, and a first point in time assigned to the first position value, and wherein the second tuple includes, for each radar signal receiver, the second position value, a characterization of the reflected radar signals, and a second point in time assigned to the second position value; determining, by the control unit, an estimated movement trajectory section of each radar signal emitter with a starting point and an end point based on the first tuple in step 360; replacing, by the control unit, the first position value in the first tuple with an estimated position value on the estimated trajectory section in step 370, and generating, by the control unit, the radar image based on the first tuple with the replaced first position value and the second tuple in step 380.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

List of reference signs

| | |
|---|---|
| 10 | radar system |
| 20 | observation region |
| 30 | data link |
| 100 | platform |
| 110 | radar unit |
| 112 | radar signals |

| 114 | reflected signals |
| 120 | radar signal emitter |
| 130 | radar signal receiver |
| 150 | movement trajectory |
| 151 | movement trajectory section |
| 152 | starting point |
| 153 | end point |
| 154 | center point |
| 200 | control unit |
| 300 | method |
| 310-380 | method steps |

**Claims**

1. A radar system (10), configured for generating radar images of an observation region (20), the radar system (10) comprising:

   a plurality of radar signal emitters (120), each radar signal emitter (120) configured to emit radar signals (112) towards the observation region (20);
   at least one radar signal receiver (130), configured to detect radar signals (114) reflected by the observation region (20);
   a plurality of mobile platforms (100A, 100B, 100C), wherein each of the plurality of radar signal emitters (120) is assigned to one of the at least one mobile platform (100A, 100B, 100C), and wherein each one of the plurality of mobile platforms (100A, 100B, 100C) is configured to move along a movement trajectory (150) while the assigned radar signal emitter (120) emits radar signals (112) towards the observation region (20);
   a control unit (200), configured to receive a first position value of each of the plurality of radar signal emitters (120), a second position value of the at least one radar signal receiver (130), and the reflected radar signals (114) as detected by the at least one radar signal receiver (130);
   wherein the control unit (200) is configured to generate a radar image based on a first tuple and a second tuple;
   wherein the first tuple includes, for each radar signal emitter (120), the first position value, a characterization of the emitted radar signal (112) at the first position value, and a first point in time assigned to the first position value;
   wherein the second tuple includes, for each radar signal receiver (130), the second position value, a characterization of the reflected radar signals (114), and a second point in time assigned to the second position value;
   wherein the control unit (200) is configured to determine an estimated movement trajectory section (151) of each radar signal emitter (120) with a starting point (152) and an end point (153) based on the first tuple;
   wherein the control unit (200) is configured to replace the first position value in the first tuple with an estimated position value on the estimated trajectory section (151) and to generate the radar image based on the first tuple with the replaced first position value and the second tuple.

2. The radar system (10) of claim 1,
   wherein each of the plurality of mobile platforms (100A, 100B, 100C) is a satellite carrying at least one of the plurality of radar signal emitters (120).

3. The radar system (10) of claim 2,
   wherein the movement trajectory (150) is an earth orbit.

4. The radar system (10) of claim 3,
   wherein the estimated movement trajectory (151) is a circular arc starting at the starting point (152) and ending at the end point (153), with a center point (154) that corresponds to a center point of the movement trajectory (150).

5. The radar system (10) of any one of the preceding claims,
   wherein each of the plurality of radar signal receivers (130) is assigned to one of the at least one mobile platform (100A, 100B, 100C).

6. The radar system (10) of claim 5,

wherein the control unit (200) is configured to determine an estimated movement trajectory section (151) of each radar signal receiver (130) with a starting point (152) and an end point (153) based on the second tuple; wherein the control unit (200) is configured to replace the second position value in the second tuple with an estimated position value on the estimated trajectory section (151) and to generate the radar image based on the first tuple with the replaced first position value and the second tuple with the replaced second position value.

7. The radar system (10) of claim 5 or 6,
wherein the at least one radar signal receiver (130) is co-located with one of the plurality of radar signal emitters (120) on one of the mobile platforms (100A, 100B, 100C).

8. The radar system (10) of any one of the preceding claims,
wherein the control unit (200) is located in a ground station or assigned to one of the plurality of mobile platforms (100A, 100B, 100C).

9. The radar system (10) of any one of the preceding claims,
wherein each one of the plurality of mobile platforms (100A, 100B, 100C) is configured to determine its position value in an earth-centered-earth-fixed (ECEF) coordinate system.

10. The radar system (10) of claim 9,
wherein the control unit (200) is configured to transform the position of the mobile platform in the ECEF coordinate system into a position value in an inertial coordinate system.

11. The radar system (10) of claim 10,
wherein the control unit (200) is configured to eliminate lateral and vertical deviations of the position value of the mobile platform from the estimated movement trajectory in the inertial coordinate system.

12. The radar system (10) of claim 11,
wherein the control unit (200) is configured to transform the position value of the mobile platform in the inertial coordinate system into a position value in the ECEF coordinate system.

13. A method (300) for generating a radar image of an observation region (20), comprising the steps:

emitting (310), by each of a plurality of radar signal emitters (120), a radar signal (112) towards the observation region (20);
detecting (320), by at least one radar signal receiver (130), radar signals (114) reflected by the observation region (20);
moving (330), each of the plurality of radar signal emitters (120), along a movement trajectory (150) while emitting, by each of the plurality of radar signal emitters (120) radar signals (112) towards the observation region (20);
receiving (340), by a control unit (200), a first position value of each of the plurality of radar signal emitters (120), a second position value of the at least one radar signal receiver (130), and the reflected radar signals (114) as detected by the at least one radar signal receiver (130);
generating (350), by the control unit (200), a radar image based on a first tuple and a second tuple;
wherein the first tuple includes, for each radar signal emitter (120), the first position value, a characterization of the emitted radar signal (112) at the first position value, and a first point in time assigned to the first position value;
wherein the second tuple includes, for each radar signal receiver (130), the second position value, a characterization of the reflected radar signals (114), and a second point in time assigned to the second position value;
determining (360), by the control unit (200), an estimated movement trajectory section (151) of each radar signal emitter (120) with a starting point (152) and an end point (153) based on the first tuple;
replacing (370), by the control unit (200), the first position value in the first tuple with an estimated position value on the estimated trajectory section (151), and
generating (380), by the control unit (200), the radar image based on the first tuple with the replaced first position value and the second tuple.

14. The method (300) of claim 13,
wherein the estimated movement trajectory (151) is a circular arc starting at the starting point (152) and ending at the end point (153), with a center point (154) that corresponds to a center point of the movement trajectory (150).

**15.** The method (300) of claim 13 or 14, further including

determining the first position value and/or the second position value in an earth-centered-earth-fixed (ECEF) coordinate system;
transforming the first position value and/or the second position value in the ECEF coordinate system into a position value in an inertial coordinate system;
eliminating lateral and vertical deviations of the first position value and/or the second position value from the estimated movement trajectory in the inertial coordinate system; and
transforming the first position value and/or the second position value in the inertial coordinate system into a position value in the ECEF coordinate system.


**Amended claims in accordance with Rule 137(2) EPC.**

**1.** A radar system (10), configured for generating radar images of an observation region (20), the radar system (10) comprising:

a plurality of radar signal emitters (120), each radar signal emitter (120) configured to emit radar signals (112) towards the observation region (20);
at least one radar signal receiver (130), configured to detect radar signals (114) reflected by the observation region (20);
a plurality of mobile platforms (100A, 100B, 100C), wherein each of the plurality of radar signal emitters (120) is assigned to one of the at least one mobile platform (100A, 100B, 100C), and wherein each one of the plurality of mobile platforms (100A, 100B, 100C) is configured to move along a movement trajectory (150) while the assigned radar signal emitter (120) emits radar signals (112) towards the observation region (20);
a control unit (200), configured to receive a first position value of each of the plurality of radar signal emitters (120), a second position value of the at least one radar signal receiver (130), and the reflected radar signals (114) as detected by the at least one radar signal receiver (130);
wherein the control unit (200) is configured to generate a radar image based on a first tuple and a second tuple;
wherein the first tuple includes, for each radar signal emitter (120), the first position value, a characterization of the emitted radar signal (112) at the first position value, and a first point in time assigned to the first position value;
wherein the second tuple includes, for each radar signal receiver (130), the second position value, a characterization of the reflected radar signals (114), and a second point in time assigned to the second position value;
wherein the control unit (200) is configured to determine an estimated movement trajectory section (151) of each radar signal emitter (120) with a starting point (152) and an end point (153) based on the first tuple;
wherein the control unit (200) is configured to replace the first position value in the first tuple with an estimated position value on the estimated trajectory section (151) and to generate the radar image based on the first tuple with the replaced first position value and the second tuple;
wherein each of the plurality of mobile platforms (100A, 100B, 100C) is a satellite carrying at least one of the plurality of radar signal emitters (120);
wherein the movement trajectory (150) is an earth orbit;
**characterized in that**
the estimated movement trajectory (151) is a circular arc starting at the starting point (152) and ending at the end point (153), with a center point (154) that corresponds to a center point of the movement trajectory (150).

**2.** The radar system (10) of claim 1,
wherein each of the plurality of radar signal receivers (130) is assigned to one of the at least one mobile platform (100A, 100B, 100C).

**3.** The radar system (10) of claim 2,

wherein the control unit (200) is configured to determine an estimated movement trajectory section (151) of each radar signal receiver (130) with a starting point (152) and an end point (153) based on the second tuple;
wherein the control unit (200) is configured to replace the second position value in the second tuple with an estimated position value on the estimated trajectory section (151) and to generate the radar image based on the first tuple with the replaced first position value and the second tuple with the replaced second position value.

**4.** The radar system (10) of claim 2 or 3,
wherein the at least one radar signal receiver (130) is co-located with one of the plurality of radar signal emitters (120) on one of the mobile platforms (100A, 100B, 100C).

**5.** The radar system (10) of any one of the preceding claims,
wherein the control unit (200) is located in a ground station or assigned to one of the plurality of mobile platforms (100A, 100B, 100C).

**6.** The radar system (10) of any one of the preceding claims,
wherein each one of the plurality of mobile platforms (100A, 100B, 100C) is configured to determine its position value in an earth-centered-earth-fixed (ECEF) coordinate system.

**7.** The radar system (10) of claim 6,
wherein the control unit (200) is configured to transform the position of the mobile platform in the ECEF coordinate system into a position value in an inertial coordinate system.

**8.** The radar system (10) of claim 7,
wherein the control unit (200) is configured to eliminate lateral and vertical deviations of the position value of the mobile platform from the estimated movement trajectory in the inertial coordinate system.

**9.** The radar system (10) of claim 8,
wherein the control unit (200) is configured to transform the position value of the mobile platform in the inertial coordinate system into a position value in the ECEF coordinate system.

**10.** A method (300) for generating a radar image of an observation region (20), comprising the steps:

emitting (310), by each of a plurality of radar signal emitters (120), a radar signal (112) towards the observation region (20);
detecting (320), by at least one radar signal receiver (130), radar signals (114) reflected by the observation region (20);
moving (330), each of the plurality of radar signal emitters (120), along a movement trajectory (150) while emitting, by each of the plurality of radar signal emitters (120) radar signals (112) towards the observation region (20);
receiving (340), by a control unit (200), a first position value of each of the plurality of radar signal emitters (120), a second position value of the at least one radar signal receiver (130), and the reflected radar signals (114) as detected by the at least one radar signal receiver (130);
generating (350), by the control unit (200), a radar image based on a first tuple and a second tuple;
wherein the first tuple includes, for each radar signal emitter (120), the first position value, a characterization of the emitted radar signal (112) at the first position value, and a first point in time assigned to the first position value;
wherein the second tuple includes, for each radar signal receiver (130), the second position value, a characterization of the reflected radar signals (114), and a second point in time assigned to the second position value;
determining (360), by the control unit (200), an estimated movement trajectory section (151) of each radar signal emitter (120) with a starting point (152) and an end point (153) based on the first tuple;
replacing (370), by the control unit (200), the first position value in the first tuple with an estimated position value on the estimated trajectory section (151), and
generating (380), by the control unit (200), the radar image based on the first tuple with the replaced first position value and the second tuple;
**characterized in that**
the estimated movement trajectory (151) is a circular arc starting at the starting point (152) and ending at the end point (153), with a center point (154) that corresponds to a center point of the movement trajectory (150).

**11.** The method (300) of claim 10, further including

determining the first position value and/or the second position value in an earth-centered-earth-fixed (ECEF) coordinate system;
transforming the first position value and/or the second position value in the ECEF coordinate system into a position value in an inertial coordinate system;

eliminating lateral and vertical deviations of the first position value and/or the second position value from the estimated movement trajectory in the inertial coordinate system; and

transforming the first position value and/or the second position value in the inertial coordinate system into a position value in the ECEF coordinate system.

Fig. 1

Fig. 2

Fig. 3

Fig. 4

Fig. 5

**EP 4 455 729 A1**

Europäisches
Patentamt

European
Patent Office

Office européen
des brevets

## EUROPEAN SEARCH REPORT

Application Number

EP 23 17 0380

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/242991 A1 (MANSOUR HASSAN [US] ET AL) 8 August 2019 (2019-08-08) * the whole document * | 1-15 | INV. G01S13/90 |
| A | CN 114 910 911 A (AEROSPACE INFORMATION RESEARCH INSTITUTE CHINESE ACADEMY OF SCIENCES) 16 August 2022 (2022-08-16) * the whole document * | 1-15 | |
| A | KUANG-HUNG LIU ET AL: "Autofocus in multistatic passive SAR imaging", ACOUSTICS, SPEECH AND SIGNAL PROCESSING, 2008. ICASSP 2008. IEEE INTERNATIONAL CONFERENCE ON, IEEE, PISCATAWAY, NJ, USA, 31 March 2008 (2008-03-31), pages 1277-1280, XP031250792, ISBN: 978-1-4244-1483-3 * the whole document * | 1-15 | |
| A | WEN-QIN WANG: "GPS-Based Time&Phase Synchronization Processing for Distributed SAR", IEEE TRANSACTIONS ON AEROSPACE AND ELECTRONIC SYSTEMS, IEEE SERVICE CENTER, PISCATAWAY, NJ, US, vol. 45, no. 3, 1 July 2009 (2009-07-01), pages 1040-1051, XP011277350, ISSN: 0018-9251, DOI: 10.1109/TAES.2009.5259181 * the whole document * | 1-15 | TECHNICAL FIELDS SEARCHED (IPC) G01S |

-/--

The present search report has been drawn up for all claims

| Place of search | Date of completion of the search | Examiner |
|---|---|---|
| Munich | 15 September 2023 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 23 17 0380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NGUYEN DUY K ET AL: "Impact of Motion Measurement Errors on the Multistatic Radar Resolution Ellipse", 2018 52ND ASILOMAR CONFERENCE ON SIGNALS, SYSTEMS, AND COMPUTERS, IEEE, 28 October 2018 (2018-10-28), pages 907-910, XP033521031, DOI: 10.1109/ACSSC.2018.8645263 [retrieved on 2019-02-19] * the whole document * | 1-15 | |
| A | KRISHNAN V ET AL: "Multistatic Synthetic Aperture Radar Image Formation", IEEE TRANSACTIONS ON IMAGE PROCESSING, IEEE, USA, vol. 18, no. 5, 1 May 2010 (2010-05-01), pages 1290-1306, XP011299027, ISSN: 1057-7149 * the whole document * | 1-15 | |
| A | LING WANG ET AL: "Antenna motion errors in bistatic SAR imagery", INVERSE PROBLEMS, INSTITUTE OF PHYSICS PUBLISHING, BRISTOL, GB, vol. 31, no. 6, 6 May 2015 (2015-05-06), page 65001, XP020285264, ISSN: 0266-5611, DOI: 10.1088/0266-5611/31/6/065001 [retrieved on 2015-05-06] * the whole document * | 1-15 | TECHNICAL FIELDS SEARCHED (IPC) |

The present search report has been drawn up for all claims

| Place of search | Date of completion of the search | Examiner |
|---|---|---|
| Munich | 15 September 2023 | Rudolf, Hans |

EPO FORM 1503 03.82 (P04C01)

## ANNEX TO THE EUROPEAN SEARCH REPORT
## ON EUROPEAN PATENT APPLICATION NO.

EP 23 17 0380

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2023

| Patent document cited in search report | | Publication date | Patent family member(s) | | Publication date |
|---|---|---|---|---|---|
| US 2019242991 | A1 | 08-08-2019 | EP | 3548919 A1 | 09-10-2019 |
| | | | JP | 6873327 B2 | 19-05-2021 |
| | | | JP | 2021504698 A | 15-02-2021 |
| | | | US | 2019242991 A1 | 08-08-2019 |
| | | | WO | 2019155657 A1 | 15-08-2019 |
| CN 114910911 | A | 16-08-2022 | NONE | | |

EPO FORM P0459

For more details about this annex : see Official Journal of the European Patent Office, No. 12/82

**REFERENCES CITED IN THE DESCRIPTION**

**Patent documents cited in the description**

- EP 3001220 A1